# EUROPEAN PATENT APPLICATION

(11) **EP 4 374 699 A1**
(43) Date of publication of application: **29.05.2024**
(21) Application number: 23211635.0
(22) Date of filing: 23.11.2023
(51) Int. Cl.: A01P 13/00, A01N 37/02, A01N 25/02

(54) **METHOD FOR PREVENTION OF BRYOPHYTES AND USE OF WATER-BASED SOLUTION FOR PREVENTION OF BRYOPHYTES**

(30) Priority: 24.11.2022 FI 20226047
(71) Applicant: UPM-Kymmene Corporation, 00100 Helsinki (FI)
(72) Inventor: Himanen, Maiju, 00100 Helsinki (FI)
(74) Representative: Berggren Oy

(57) **Abstract**

A method for controlling bryophytes in the cultivation of seedlings is presented, the cultivation comprising the cultivation of one or more seedlings in a substrate, wherein the method comprises providing a water-based solution which contains only one active agent, 0.3 to 1.5 wt-% of acetic acid as the only organic compound, and treating the substrate comprising one or more seedlings with the water-based solution. Use of a water-based solution is also presented, which contains acetic acid as the only organic compound in a concentration of 0.3 to 1.5 wt-% of acetic acid, for controlling bryophytes in substrate upon cultivation of seedlings in the substrate.

## Description

### Field of the application

The present application relates to a method for controlling bryophytes, as well as to the use of a water-based solution containing acetic acid as the only organic compound for controlling bryophytes.

### Background

Seedlings can be grown in nurseries and corresponding areas, for various purposes, such as for forest cultivation or for gardens. The seedlings can be grown by sowing seeds in a substrate, such as soil, peat, fibre material, sand, mineral wool, vermiculite, or the like, or combinations of these. The substrate contains solid particles and pores left in between them and providing volume for water and air. Seedlings are typically grown from seeds to produce seedlings of good quality, so-called target seedlings, which are ready to be moved to the planting site. Typically, this may take one or two years.

Particularly forest seedlings are often grown as seedlings with a root ball, whereby cell packs are used, one seedling growing in each cell. A seedling with a root ball, or a seedling in a cell, is a generic term for forest cultivation seedlings which are planted with a root ball. Seedlings with root balls can be grown in cultivation surfaces containing several root balls and, correspondingly, several seedlings can be grown in a relatively small area. A unit formed by root balls or cells is called a box, a tray, or a pack of cells. A cultivation surface refers to a bottom, a frame, or a supporting framework on which packs of seedling cells are held during cultivation. The growing density and the volume of the root ball have an essential effect on the growth conditions and the growth of the seedlings. Particularly when the density increases, bryophytes growing on the substrate hamper the cultivation of seedlings by taking space and obstructing the intake of light, water and nutrients by the seedlings. When seedlings with root balls are grown in packs of cells, bryophytes often cause merging of cells, which further results in the growth of the roots of seedlings into adjacent cells, whereby the root balls may merge, which hampers the growth, handling, removing, and planting of the seedlings with root balls further.

In gardening, a seedling with a root ball often refers to a large plant grown in an open field, the root ball being wrapped in a mesh or burlap after being taken out.

A particularly difficult bryophyte type is liverwort, such as common liverwort (*Marchantia polymorpha*)*.* In Finland, three subspecies are known: *M*. *polymorpha subsp. montivagans syn. M. alpestris, M. polymorpha subsp. polymorpha syn. M. aquatica,* and *M. polymorpha subsp. ruderalis.* Of these, the last mentioned is a common weed in gardens and nurseries, called by the generic term "liverwort". It thrives in nurseries and other cultivated areas, thanks to the open growing sites, because it requires light and open ground as well as suitable moisture, particularly at the early stages of its growth, these requirements being necessary for seedling cultivation as well. This complicates the control of bryophytes further.

Bryophytes, such as liverwort, are difficult or impossible to remove and/or control mechanically, for example by machine or manually. Signs of liverwort include green growth with a grey leathery bottom on top of the substrate, such as peat, which growth may appear at the base of a seedling, also on top of a husk. In particular, liverwort is found in film greenhouses and, under favourable conditions, even on compact soil in the open. Liverwort spreads effectively through spores. Attempts have been made to control liverwort by covering the surface of the substrate with a suitable mulch, such as even-grained sand, or by applying a treatment agent, such as Mosskade^{®}, which forms a film to suppress bryophyte. These covering methods can be considered mechanical control methods.

Chemical control of bryophytes is challenging as well, because while the bryophytes should be eliminated, the well-being and survival of the seedlings should also be secured. Some specific chemical bryophyte control agents have been applied, but their availability, price, approval, usability, and/or safety may constitute an obstacle. Because the cultivation of seedlings involves a lot of manual work, the safety of workers must be a particular concern, whereby poisonous, carcinogenic or otherwise harmful control substances must be avoided. Also, corrosion or contamination of equipment and tools used should be avoided. Therefore, there is a need for novel bryophyte control agents for use in cultivation of seedlings. In particular, there is a need to find inexpensive, simple, acceptable, safe, and efficient agents.

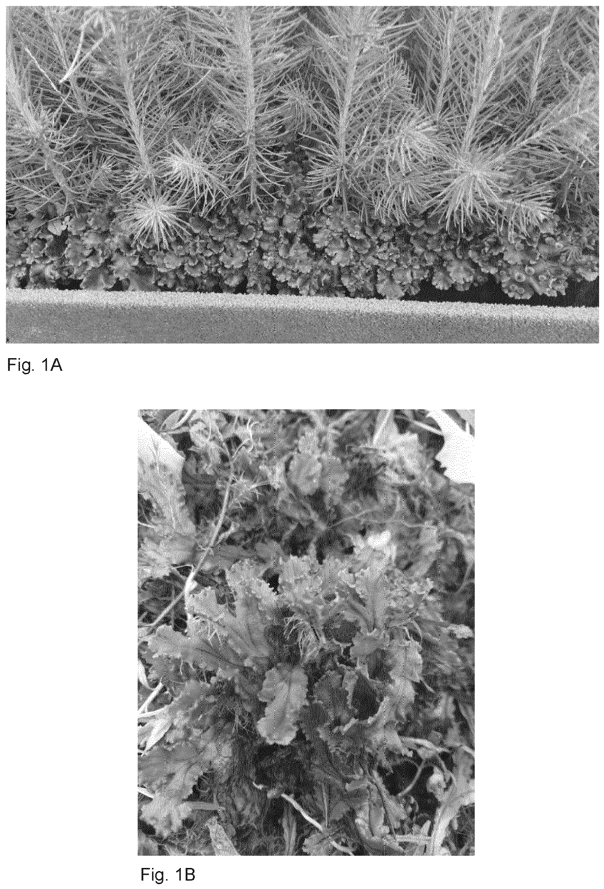

Figure 1 shows photographs of typical growths of liverwort in a substrate for conifer seedlings. Figure 1A shows how liverwort covers, in practice, the whole substrate and also extends to the base of the seedling. In Fig. 1B, high growths of liverwort have been formed, strongly suppressing the seedlings. Only one delicate seedling penetrates the liverwort at the top left corner of the figure.

### Brief summary

In the present invention, a simple aqueous solution was found which can be applied in various sites, particularly for controlling bryophytes disturbing the growth of forest seedlings, and which was capable of solving problems of prior art, particularly in the field of chemical treatment agents and treatment methods. It was surprisingly found that the seedlings tolerated the content of acetic acid in the substance which was, however, capable of eliminating bryophytes. There is no need, and it may not be possible or desirable, to use any other chemical agents and/or mechanical methods.

In the present invention, a safe and simple method was provided for controlling bryophytes which were harmful to and/or disturbing the growth of seedlings in a substrate for the seedlings in the cultivation of seedlings which had already sprouted and were growing, comprising the cultivation of one or more seedlings in the substrate. 'Safe' refers to the safety of both the users and the equipment used; in other words, the aim is to avoid damage to the users and the equipment caused by the control agent.

The present application provides a method for controlling bryophytes in the cultivation of seedlings, comprising the cultivation of one or more seedlings in a substrate, wherein the method comprises
- providing a water-based solution containing only one active agent, 0.3 to 1.5 wt-% of acetic acid as the only organic compound, and
- treating the substrate comprising one or more seedlings with the water-based solution.

The present application also provides the use of a water-based solution containing only one active agent, acetic acid as the only organic compound, in a content of 0.3 to 1.5 wt-% of acetic acid, for controlling bryophytes in a substrate upon cultivation of seedlings in the substrate.

The present invention is particularly applicable and useful at the stage when the seedlings have already sprouted and are growing; that is, when there are already seedlings and/or sprouts in the substrate, whereby it is important that the control substrate and the method used do not damage the existing seedlings and/or sprouts. Such an agent can be applied in liquid form, which makes it possible to apply it quickly, simply, and by various devices, and the seedlings or equipment do not need to be minded during applying. Sterilization of substrates and structures before the cultivation of seedlings, used in some methods of prior art, cannot give a similar result; and furthermore, it is carried out at a different stage and by using agents, concentrations and/or compositions which are harmful to the seedlings.

Because the present solution for controlling bryophytes contains only one main active agent, acetic acid, which is easily available and inexpensive, the present solution and the methods for applying it are easy and advantageous to implement. In practice, any acetic acid product or vinegar, such as spirit vinegar, can be applied by diluting to a suitable concentration. Vinegar is available in grocery stores, whereby the invention can be implemented, in practice, almost anywhere and at any time.

Because acetic acid is an organic acid, it is biodegradable, and no harmful residues of the bryophyte control agent solution are left in the seedlings, at the growth site or in the environment. Furthermore, there is no need for other active agents, such as other acids or actual control agents, film-forming agents, salts, or the like, so that when these are not included, there are no disadvantages related to them, whereby the solution is safe to use and the use is easily controllable. The seedlings, particularly forest seedlings, tolerate the solution well. Possible risks and precautions are, in practice, associated with acetic acid only and are therefore relatively negligible. The solution does not contain film-forming agents which could hamper the survival of seedlings, and/or which solution could be too viscous to be applied efficiently by sprinkling. The present solution is, in practice, a dilute aqueous solution containing no solid matter, whereby it is well suited to be applied by sprinkling through even small nozzles and by various means, and in practice, it does not leave solid residues when dried.

Because the acetic acid content of the solution to be applied is relatively low, it does not damage the materials, equipment or tools used, such as substrates, cultivation surfaces, structures, or devices used for sprinkling or other applying of the solution, or their parts, such as pipes, nozzles, pumps, valves, containers, and the like. The solution is well suited for use with automated or other mechanical devices, such as an irrigation device, for example to be applied by means of an irrigation ramp. Moreover, no long waiting time is needed after the treatment, before the seedlings or cultivation surfaces and/or other structures or materials can be handled; nor does the dilute acetic acid solution cause long-term odour problems. Thus, the treatment of bryophytes does not cause significant interruptions in other work steps; nor is specific safety equipment needed, particularly after the treatment.

### Description of figures

Fig. 1 shows liverwort growths in seedling stands.
Fig. 2 shows a seedling cell after treatment with 5% acetic acid.
Fig. 3 shows an example of widely spread growth of liverwort in the open.
Fig. 4 shows seedling cells after a single treatment with 0.5% acetic acid.
Fig. 5 shows seedling cells after a single treatment with 0.6% acetic acid.
Fig. 6 shows seedling cells after two treatments with 0.6% acetic acid.
Fig. 7 shows seedling cells after two treatments with 0.5% acetic acid.
Fig. 8 shows seedling cells after two treatments with 0.6% acetic acid.
Fig. 9 shows seedling cells after two treatments with 0.5% acetic acid.
Fig. 10 shows seedling cells after two treatments with 0.6% acetic acid.

### Detailed description

Unless otherwise indicated, the percentages presented here are in weight percent. The open wording 'comprises' used may, in an alternative, be delimited by the exclusive wording 'consists of'.

A method for controlling bryophytes in the cultivation of seedlings is presented, the cultivation comprising the cultivation of one or more seedlings in a substrate. The cultivation is controlled, such as cultivation in a nursery or a corresponding environment where the aim is preferably to obtain target seedlings. In the method, a substrate comprising one or more seedlings may be provided, or a substrate may be provided in which one or more seedlings are provided. Consequently, the method may comprise growing seedlings from a seed in a substrate, or the seedlings may already have sprouted or grown further, such as in a stage of early growth, in a stage of fast growth, and/or in a stage of acclimatization.

The method comprises providing a water-based solution which contains acetic acid, and treating a substrate comprising one or more seedlings with the water-based solution. The water-based solution may be provided in a desired concentration, or it may be diluted to the desired concentration before use.

A water-based solution is presented which contains acetic acid as the only organic acid in a concentration of 0.3 to 1.5 wt-%, such as 0.4 to 1.2 wt-%, for controlling bryophytes in the cultivation of seedlings. The solution may be any solution described herein, and it may be provided as a product, such as a ready diluted product or a concentrate to be diluted to a desired concentration, for example in any suitable receptacle or container, preferably equipped with instructions for diluting and/or use, for example as described herein. The instructions may be provided, for example, in writing, such as on a label of a receptacle, container or its package, and/or in a written enclosure, and/or as a link to a website, attached to any of these.

Acetic acid is preferably the only acid, the only organic acid, and/or the only organic compound in the solution, preferably the only acid or compound that is present in a significant amount. Consequently, the solution contains, for example, substantially no inorganic acids and substantially no organic acids, such as lactic acid, formic acid, citric acid, oxalic acid, uric acid, maleic acid, tartaric acid, caprylic acid, capric acid, or the like. If other acids or compounds are present, their total content is very low in comparison to acetic acid, for example less than 10 wt-%, preferably less than 5 wt-%, less than 1 wt-%, or less than 0.5 wt-% of the content of acetic acid. In the invention, it was found that acetic acid alone was capable of efficiently controlling bryophytes, particularly liverwort, but in the concentrations applied it was not particularly harmful to the seedlings. In particular, conifer seedlings tolerated acetic acid well. Because no other acids are present, the seedlings only need to tolerate acetic acid, which allows using the solution for more seedlings types and better survival of the seedlings. Because no other acids or substances need to be separately applied, preparing and using the present solution is easy and controllable.

Preferably, acetic acid is the only effective agent in the solution, that is, the only agent that can be significant in the control of bryophytes. The source of acetic acid used may contain traces of other substances, for example when vinegar is used, but their amounts are normally so low that they cannot be considered to have an effect in controlling bryophytes, particularly in the dilutions used. The present water-based solution may thus contain traces of other substances in addition to acetic acid, such as in 0.1 wt-% or less, 0.05 wt-% or less, or 0.01 wt-% or less, of the total weight of the water-based solution. Preferably, the solution does not contain, or does not substantially contain, one or more of the following: salts, such as inorganic and/or organic salts, metal compounds, such as iron compounds, alcohols, tensides/surfactants, oil, protein, carbohydrates, such as starch or other organic polymers, such as ones that are capable of forming a film, vegetable extracts, and/or control substances. Control substances refer to substances which are intended to control bryophytes, fungi, lichen, weeds, or the like, and whose function is normally based on toxicity, such as ethoxylated alcohols, toxic substances such as hexyl-D-glucoside, benzyl-C12-16 alkyl dimethyl ammononium chloride, sodium metasilicate pentahydrate, kinoclamine, and/or corresponding agents or other agents which may be present in control substance compositions of prior art. Control substance compositions containing such constituents may be used for treating, for example, yard pavings, roofs, pedestals, or the like, where it is not necessary to consider the survival of other plants. However, they are normally not suitable for the treatment of seedlings.

In an embodiment, the water-based solution does not contain added salt, metal compounds, alcohol, surfactant, oil, protein, starch, or other organic polymers, vegetable extract, control substance, and/or other active agents. 'Added' refers to the possibility that the substance may contain residues of one or more other substances naturally present in the raw material, for example in the case of vinegar, whereby the substances may originate from the manufacturing process of the raw material, and/or the other substances are other impurities, for example originating from water used for diluting, but which have not been, for example intentionally, added to the raw material of the present solution and/or to the present water-based solution.

As the raw material for preparing the present solution, it is possible to use almost any solution or concentrate which contains acetic acid and which may be called a storage solution whose acetic acid content is preferably higher than that of the present water-based solution. One example is vinegar supplied as a consumer product, which is a relatively dilute aqueous solution of acetic acid and which is available, in practice, at any food store, wholesale store, or other supplier or producer. Vinegar is particularly suitable for small-scale operation and/or if there is a need to obtain raw material quickly. Depending on the origin, residues of the starting substance may be left in vinegar, for example in wine vinegar or spirit vinegar. Spirit vinegar normally has an acetic acid content of 10 wt-%, and it may contain about 0.5 wt-% carbohydrates, or in some cases the vinegar may contain fat, carbohydrates, protein and salt less than 1 wt-%. When such a product is diluted, for example, 10-fold, yielding a 1% solution of acetic acid, the content of other constituents naturally present in the vinegar will remain below 0.1 wt-%, whereby these constituents have, in practice, no effect on the bryophyte controlling efficiency or the well-being of the seedlings.

In an example, the method comprises
- providing a stock solution of acetic acid, such as a vinegar solution;
- diluting the stock solution of acetic acid with water to a water-based solution containing 0.3 to 1.5 wt-% of acetic acid as the only organic acid, preferably whereby only water and the stock solution of acetic acid are combined;
- treating the substrate comprising one or more seedlings with the water-based solution.

For larger-scale and more systematic operation, for example in large nurseries or for other industrial operation, the raw material may be obtained from an industrial supplier or producer, and it may be of purer quality and/or more concentrated. The raw material may be a concentrated solution of acetic acid. An anhydrous solution, or a solution with a content higher than 80 wt-% of acetic acid is called glacial acetic acid. Because the concentration of acetic acid needed in the method is relatively low, the raw material must normally always be diluted to the desired concentration.

For diluting, any suitable water can be used, such as tap water or other water, such as natural water. For example, water suitable for irrigation of seedlings is suitable for diluting as well. Consequently, the present solution can also be prepared from a concentrate in places where clean tap water is not available, for example in remote areas. This increases the applicability of the method and the substance to various targets and methods. Preferably, merely the raw material of acetic acid and water are combined.

It was found that a specific concentration of acetic acid in aqueous solution alone was capable of eliminating bryophytes but not the seedlings. When stronger concentrations of acetic acid were used, the seedlings suffered as well and finally died. Too dilute a concentration of acetic acid, in turn, was not capable of eliminating bryophytes. To achieve the desired result, the content of acetic acid in water-based solution was preferably in the range of 0.3 to 1.5 wt-% of acetic acid from the total weight of the water-based solution.

The water-based solution may contain 0.4 to 1.2 wt-% of acetic acid. Tests showed that a good bryophyte control effect without damaging the seedlings was achieved with an acetic acid concentration as low as 0.4 to 0.7 wt-%, particularly in the treatment of conifer seedlings, but in some cases, a higher concentration can be used as well, particularly if it is tolerated by the seedlings, such as 0.4 to 1.0 wt-%, or 0.4 to 0.8 wt-%. The concentration may be, for example, approximately 0.5 wt-%, approximately 0.6 wt-%, approximately 0.7 wt-%, approximately 0.8 wt-%, approximately 0.9 wt-%, or approximately 1 wt-%, or any range between two of said numerical values.

In particular, the present method may be a method for controlling bryophytes in the cultivation of seedlings, the cultivation comprising the cultivation of one or more seedlings in a substrate having a bryophyte problem, such as one showing growth of bryophytes or signs of a risk thereof. The method may comprise detecting a bryophyte problem, for example detecting germination and/or growth of bryophytes, and carrying out a treatment, or making a decision to carry out a treatment, if the bryophyte problem is detected. The bryophyte problem may also comprise a known risk of growth of bryophytes in the substrate, for example on the basis of previous experience on similar cultivation, whereby it is not necessary to detect actual germination and/or growth of bryophytes. The method may be a method for controlling bryophytes in a substrate, such as a substrate having a bryophyte problem, and/or having a risk of a bryophyte problem, and/or showing signs of such a risk. Preferably, the bryophyte is a bryophyte harmful to the growth and/or cultivation of seedlings, such as a bryophyte disturbing the growth and/or cultivation of seedlings, particularly forest seedlings. The growth or presence of such bryophytes is not desirable in the substrate for the seedlings. The method may also be a method for controlling a bryophyte harmful for the growth and/or cultivation of seedlings in a substrate, such as a substrate used in greenhouse cultivation.

The substrate may be any substrate which is suitable for the cultivation of seedlings and which may contain, for example, soil; peat; fibre material; cellulose material which may comprise cellulose for example in fibrous form, fibril form, crystalline form, or in another suitable form; sand; mineral wool; vermiculite; sphagnum or other harmless bryophytes; wood fibre or other wood-based material, such as pellets or chips; reed grass or other reed material; material obtained from composting; and/or material obtained or derived from these; or a mixture of two or more of these. The substrate may be artificial, whereby it is preferably made and/or formed for the cultivation of seedlings and, for example, compacted or otherwise formed in a receptacle and/or a limited space. The substrate may be arranged on the ground and/or in receptacles, such as boxes and/or a cell, in a limited space, and/or in cells and/or packs of cells, and/or in balls or packs of balls. The substrate may be a substrate in a nursery, such as a substrate for greenhouse cultivation. The seedlings are intended to be cultivated in the substrate; i.e. the seedlings or seeds are planted in the substrate.

The bryophyte may be liverwort which is normally the most challenging bryophyte type and particularly present in cultivation of forest seedlings and many other seedlings as well, particularly in greenhouses and when using separate cultivation surfaces, for example in the cultivation of ball seedlings, that is, when the substrate comprises a pack of cells. In the cultivation of ball seedlings, one or more seedlings in the substrate may comprise one or more cultivation cells. Preferably, the substrate comprises a pack of cells. The pack of cells contains two or more seedlings, preferably each in their own cell, such as a two or more cultivation cells, whereby one problem is the merging of cells by bryophyte, resulting in a particular need to control the growth of bryophytes in the cells and the interspaces between them.

The seedling may be a forest seedling, such as a coniferous forest seedling, for example a spruce and/or pine seedling. The cultivation of forest seedlings normally takes so long that a bryophyte problem will arise and require measures. Moreover, forest seedlings are normally cultivated under conditions in which the control of bryophytes is challenging, for example as ball seedlings densely arranged in packs of cells. Conifer seedlings were found to be relatively sensitive to acetic acid, whereby very high concentrations of acetic acid could not be used for all conifer seedlings, particularly coniferous forest seedlings, for example a solution higher than 1.5 wt-%, or a solution higher than 1.2 wt-%, or even a solution higher than 1.0 wt-%. Because the usable concentration range of acetic acid is relatively narrow, and because it may also be specific to the seedling type, finding it was surprising. Experiments were conducted on the cultivation of spruce seedlings in particular, but the method and the solution were found to be suitable for other seedlings as well, particularly forest seedlings and/or conifer seedlings, such as pine seedlings which are grown under similar conditions and by similar methods. Seedlings of deciduous trees can be treated as well, but they were found to be even more sensitive than conifers to acetic acid.

In general, seedlings grown in a nursery may be susceptible to bryophytes, and in such cases, particular care needs to be taken in the control of the bryophytes, because very large quantities of seedlings are grown in nurseries. A bryophyte problem in a nursery may result in great economic losses, because in the worst case, bryophyte spores may contaminate all the substrates. In an embodiment, the substrate comprising one or more seedlings is in a nursery. The present solution is well suited to be applied in nurseries, because it is easy to spread on substrates or cultivation surfaces by applying, for example, existing irrigation devices or other devices or equipment suitable for sprinkling. These are commonly used for irrigation of seedlings in greenhouses and/or in open fields, so that the application of the present solution can be performed, if necessary, in the same way. The substrate comprising one or more seedlings may be in a nursery and/or in an open field.

The treatment can be carried out after detecting bryophyte, i.e. when a bryophyte problem is present, and/or the treatment can be carried out preventively, whereby bryophyte has not yet been detected or the first signs of bryophyte have been detected but an actual bryophyte problem is not yet acute.

In an embodiment, a substrate comprising one or more seedlings is treated by sprinkling with the present water-based solution. The sprinkling, which may also be called spraying or atomizing, may comprise any method by which a solution is output under pressure from a nozzle or the like. The sprinkling can be performed by means of an irrigation device, such as an irrigation ramp. The irrigation ramp may be permanently installed in a greenhouse, or it may be arranged to be movable to a site. The irrigation ramp may comprise one or more elements mounted on a guide bar or a similar support, comprising one or more nozzles, being movable by an actuator, and arranged to travel over the seedlings to sprinkle water and/or aqueous solution onto the seedlings. Other irrigation arrangements suitable by sprinkling may be used as well, for example an irrigation system connected to a tractor or the like, and/or other nozzle devices, but also manual devices, such as portable tanks, movable tanks and the like, which may have a pressurized container for the solution to be sprinkled and one or more nozzles for directing the solution to the target. In a small scale, manual spray bottles may be used. Because the present solution is relatively harmless, there are no significant limitations to the use of manual equipment, unlike actual control substance compositions, for example kinoclamine, which is normally allowed to be spread only by using an irrigation ramp in greenhouses or by trailing nozzle devices in open fields.

The treatment of the target, i.e. the seedlings and/or their substrate and/or cultivation surface, by spraying or sprinkling can be carried out to such an extent that a desired amount of solution is applied on the target. Normally, it is not necessary to irrigate the whole substrate, such as peat, but it is sufficient to moisten the bryophyte on the surface to provide a one-time treatment killing the bryophyte or most of it. The water-based solution can be applied in an amount of, for example, 2000 to 6000 litres per hectare for one treatment. Tests showed that 3000 to 5000 litres per hectare was adequate for most purposes.

If necessary, the treatment can be repeated after a suitable period of time, which may be one or several days, one or several weeks, or one or several months. Tests revealed that in some cases a month is too long a period, so that in most cases the treatment can be repeated at intervals of 1 to 3 weeks, for example 2 to 3 weeks. The treatment can be carried out at different times of the growing season, and different treatment intervals and/or amounts of solution and/or concentrations of acetic acid can be applied at different times. The growing season may refer to the thermal growing season of the seedlings, which may be substantially be the same or overlapping with the thermal growing season of bryophytes. For example, the bryophytes and/or the seedlings may be more sensitive to the solution at a specific time compared with another time, such as at the beginning, middle or end of the thermal growing season, which can be considered when planning the treatment. The bryophyte problem may become worse as the growing season progresses.

Relevant factors may include initiation of growth, which may begin by the growth of either the roots or the sprout, depending on the temperature of air and the substrate, and/or the length and characteristics of the growing season, as well as the cessation of the growing season and the conditions thereafter. For example, in Finland, where the temperature of the growing substrate is low in the spring, such as below 5°C, the growth of the sprout can begin first when heated by sunlight, and the roots will follow when the temperature of the growing substrate rises above 8°C. The roots grow the most from June to August when sufficient light, heat and moisture is available. In late summer, the longer nights stop the sprout from growing in length but the growth of the roots and in the diameter will continue until the amount of light and the temperature decrease further. These factors may be influenced by the presence of bryophytes, and the seedlings may be more susceptible to the effects of bryophytes at different times or, correspondingly, may tolerate them better or more poorly at different times. In particular, controlled cultivation of seedlings in nurseries can be divided into stages such as a germination stage, a stage of early growth, a stage of rapid growth, and a stage of acclimatization.

It was found to be preferable that the treatment is performed on a cloudy day and/or by avoiding direct exposure to sunlight. Treatment in the sunshine increases damage to seedlings, such as damage of needles. The treatment may also remain incomplete, whereby the acetic acid does not reach the bryophyte properly. On the other hand, it was found that too cool and/or moist air, such as air in a greenhouse or another closed space, could prevent evaporation of the water-based solution after the treatment, subjecting the seedlings to damage. Consequently, it may also be necessary to avoid particularly moist conditions and/or cold air, such as 10°C or below, or 5°C or below, during and/or after the treatment, such as 1 to 2 days after it.

In an example, the method comprises the treatment of a substrate comprising one or more seedlings two or more times with the water-based solution, preferably during the growing season. Said two or more treatments can be carried out at intervals of the same or different lengths, such as the length of a period already mentioned above. In the tests, it was found that only two treatments two weeks apart was in most cases sufficient to efficiently eliminate liverwort. If necessary, three or more treatments may be carried out.

The tests showed that the best effects on bryophytes were achieved by a treatment at the beginning and/or in the middle of the growing season. At the end of the growing season, or in autumn, the effect was no longer so pronounced, which may be due to the bryophyte having, due to cold weather, entered into a more or less dormant state and preparing for winter. This may also be influenced by whether the seedlings are grown in greenhouses or in the open, whereby the growing season is normally longer in greenhouse cultivation. As to the seedlings, it seems that bryophyte control with the solution should be performed specifically at a stage of early growth and/or at a stage of acclimatization of the seedlings, possibly also at a stage of germination. Treatment can also be performed or continued at a stage of acclimatization of the seedlings, particularly if the substrate contains bryophytes reactive to the treatment.

Use of a water-based solution containing acetic acid as the only organic compound is presented for controlling bryophytes in the cultivation of seedlings, particularly in a substrate for seedlings, and/or in a concentration of 0.3 to 1.5 wt-% of acetic acid in the solution. The use may be according to any of the methods presented herein. The solution may be provided for use in concentrated form or as a concentrate, or in a desired final concentration of acetic acid.

The use or the method may comprise providing, obtaining and/or supplying raw material for the solution, for example a concentrate, to a location for use, and diluting it to a required concentration. The acetic acid content of the concentrate may be, for example, 5 to 100 wt-%, such as 5 to 80 wt-%, for example 10 to 80 wt-%, or 10 to 50 wt-%.

### Examples

In 2022, spruce seedlings were cultivated as cell seedlings in peat in a nursery, both in a greenhouse and in the open, and treated with different dilutions of vinegar at different times, and the findings are presented as follows. The dilutions were prepared by diluting commercial 10% spirit vinegar with tap water. Different substrates having seedlings were marked with letter and number codes (MH = film greenhouse, R = ramp, i.e. open field).

### 27 July

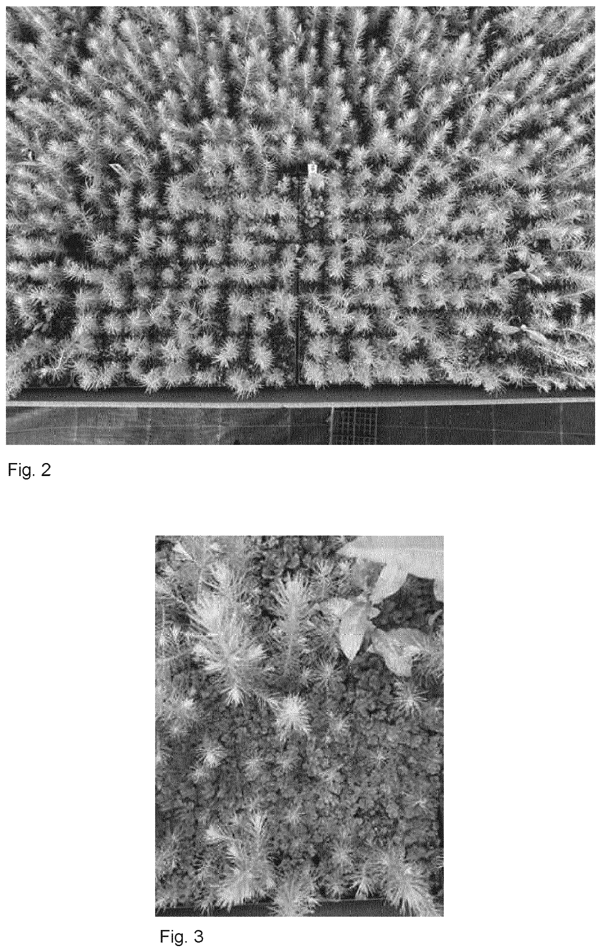

MH16 and R7: 100% vinegar was applied on one cell and 50/50% vinegar/water mixture was applied on one cell (5% acetic acid). The next day, it was found that both the bryophytes and the seedlings had died (Fig. 2, area at the bottom centre).

### 29 July

MH16: 1% vinegar was applied on one cell (4 ml/400 ml, 0.1 % acetic acid): On 1 August, no visible results
R17: already abundant growth of liverwort. 1%, 5%, 10%, 15%, and 20% mixtures were applied on a total of five cells.

On 1 August, results were observed as follows:
- 1% (0.1 % acetic acid): no visible changes
- 5% (0.5% acetic acid): liverwort turned brown, no visible changes in spruce seedlings
- 10% (1.0% acetic acid): liverwort strongly turned brown, and the lowest needles in some spruce seedlings turned brown, primarily where the needles were buried in bryophytes
- 15% (1.5% acetic acid): liverwort turned brown, also some spruce seedlings showed clear damage and some seedlings had died
- 20% (2.0% acetic acid): liverwort had turned brown and most spruce seedlings had died

### 1 August

R9: relatively low mat-like growth of liverwort. Dilution mixtures were applied 1 mixture per cell in a location where seedlings were clearly more sparse: 2%, 3%, 4%, 5%, and 6%.

Also MH14: early growth of liverwort already visible. 2%, 3%, 4%, and 5% mixtures were applied.

### 2 August

MH14: changes visible for all mixtures, liverwort turned grey, seedlings looking well.

R9: best results for liverwort with 4%, 5% and 6% mixtures; cells with 2% and 3% mixtures less striking but brown liverwort observed in them as well. All seedlings looking well, no brown needles observable.

### 3 August

Test to be continued with 5% mixture (0.5% acetic acid); looking for the suitable amount. A tractor sprayer takes 900 l, so the quantity of mixture per cell would be 80 ml. This is tested in both R9 and MH14. In the morning, 0.8 dl of 5% mixture (0.5% acetic acid) was applied on one cell both in R9 and MH14.

The results were visible already in the afternoon. The seedlings looked well, the bryophytes had turned grey. 0.8 dl seems a suitable amount; sufficient for more spraying runs than just one layer per area.

### 4 August

MH14: 1.44 l of 4.7% mixture (0.47% acetic acid) was applied on 1 substrate.

R9: 1.44 l of 5% mixture (0.5% acetic acid) was applied on 1 substrate. Windy weather, and liverwort already very layered.

### 5 August

MH14: the mixture was effective, liverwort is grey. Few spots missed by substance during application.

R9: some brown spots in liverwort but relatively poor result. R9 end half retreated by applying 5% mixture (0.5% acetic acid) on a relatively sparse substrate. Next idea is to test by applying by ramp on a couple of rows of substrate in R17.

### 11 August

MH14: Mosskade has been applied so that cells treated with vinegar can no longer be followed up.

R9: Browning of liverwort observed in previously treated area; however, vinegar was probably not spread everywhere because of light fog and wind. In R9 end half, clear browning was observed in some places, but also in this substrate, there must be spots missed by the vinegar mixture. Knapsack sprayer gives a very weak spray, and combined with the wind, the performance declines.

### 11 August

MH12: Less than 0.5 dl of 5% dilution (0.5% acetic acid) was applied on one cell. The aim was 0.445 dl which would be a quantity consistent with the total amount of Mosskade applied per hectare, i.e. 2500 l. This would facilitate work if the total amount per hectare would be in the same order, because ramp rates *etc.* are adjusted to this amount.

### 29 August

R9 checked, where the liverwort problem was already bad, really extensive growths (Fig. 3). The conclusion to be drawn from this is that treatment once per month is not sufficient. It is true that the liverwort growth in R9 was already extensive, so that regular treatment should be started at an earlier stage than was the case in R9 on the day of applying, 1 August.

### 31 August

MH15 end was treated with vinegar mixtures: 3000 l, 4000 l and 5000 l with concentrations of 4%, 5% and 6%. One mixture per one substrate, half of the substrate being control and half being treated. The idea was to test treatment once a week and in another greenhouse once every two weeks. Half of the substrate was treated, half of the substrate used as a control.

### 5 September

The areas were checked, and good results were obtained on the following substrates: 5000 l of 5% and 6% solutions. Treatment was very effective, and the result is clearly visible. Also with the substrates 4000 l of 5% and 6% solutions, changes were observed, as well as with 3000 l of 6% solution. Treatment will be continued on these substrates.

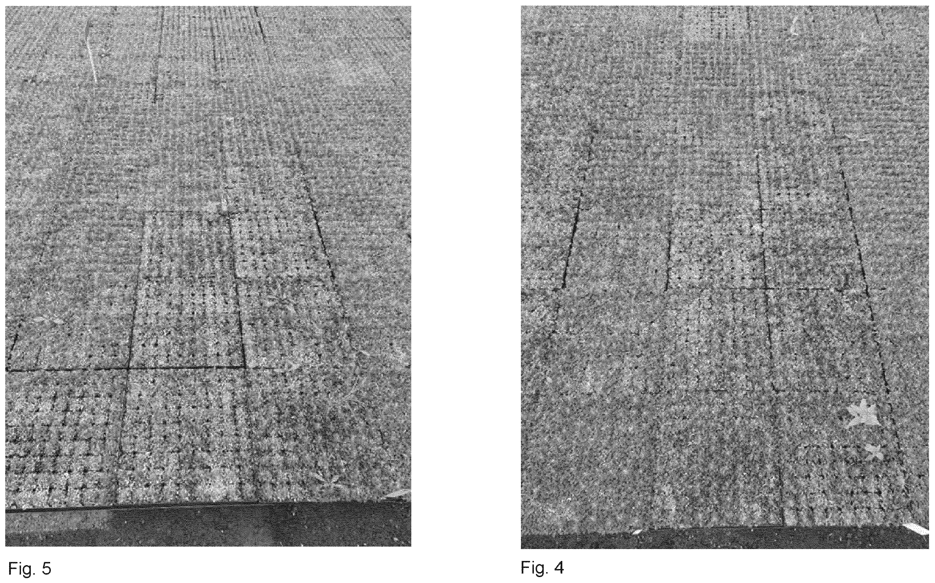

5000 l of 5% after a single treatment onto half a substrate, half of the substrate acting as a control (Fig. 4). Liverwort growth had died in the treated areas, but the seedlings were alive.

5000 l of 6% solution after a single treatment (Fig. 5). Also in these tests, liverwort growth had died in the treated areas, but the seedlings were alive.

### 6 September

MH19 end was treated with a test arrangement similar to the end of MH15. However, Mosskade was applied here on 12 September, and follow-up of the vinegar tests is no longer so relevant.

### 14 September

4000 l and 5000 l were applied in concentrations of 5% and 6%, as well as 3000 l in concentration of 6%. This refers to application once every two weeks. It was decided to discontinue the test at the end of MH19 because Mosskade had been applied. Only the test substrates at the end of MH15 are left, being treated once every two weeks, and this is continued.

### 26 September

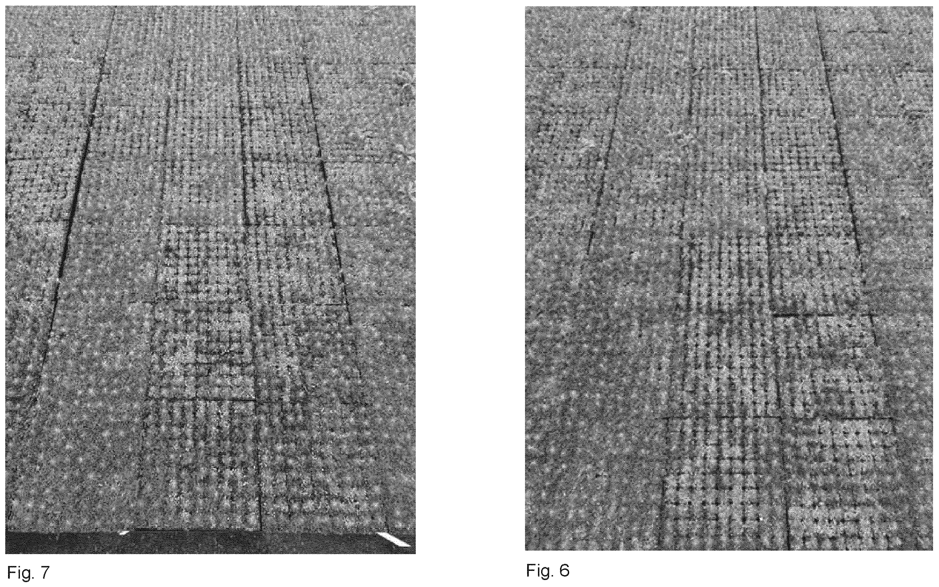

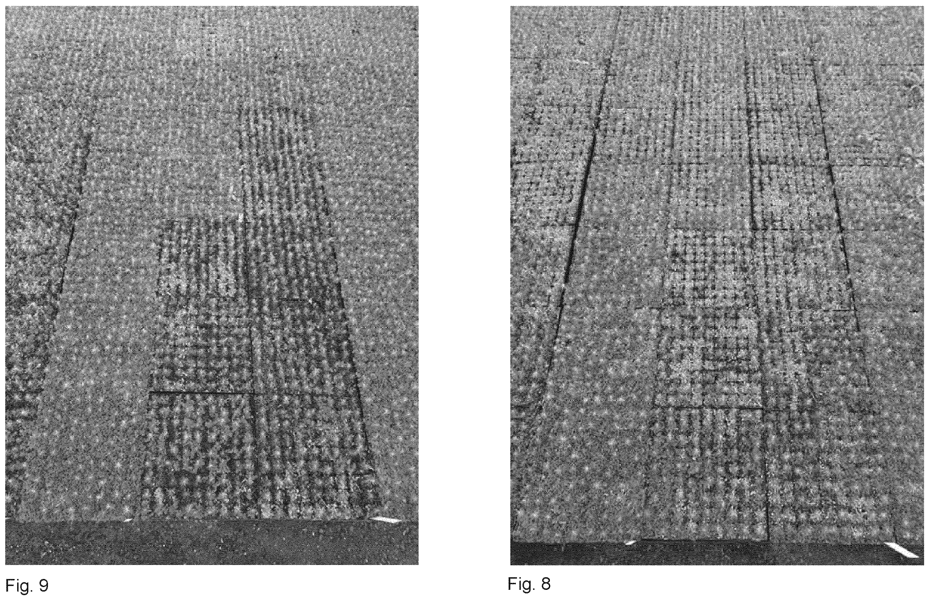

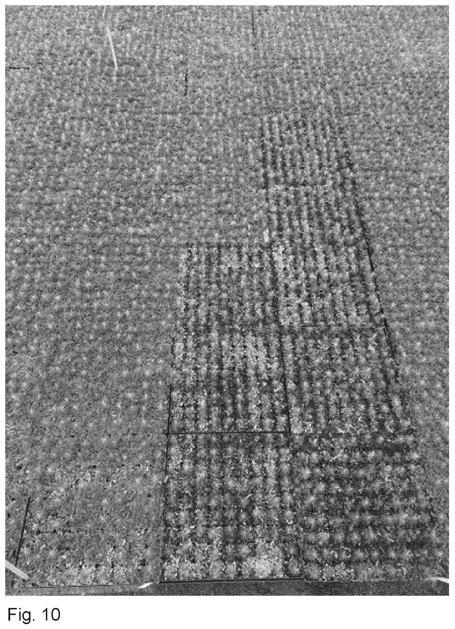

Excellent effect was obtained with dilutions of 5% and 6% in an amount of 5000 l. Also 4000 l of the same dilutions and 3000 l of 6% gave good results.
3000 l of 6% (0.6% acetic acid) after two treatments (Fig. 6)
4000 l of 5% (0.5% acetic acid) after two treatments (Fig. 7)
4000 l of 6% (0.6% acetic acid) after two treatments (Fig. 8)
5000 l of 5% (0.5% acetic acid) after two treatments (Fig. 9)
5000 l of 6% (0.6% acetic acid) after two treatments (Fig. 10)

In the pictures taken on 26 September, the first treatment was on 31 August and two treatments had been implemented at intervals of two weeks.

### 28 September

The trial has been continued at the end of MH15 by applying again 3000 l of 6%, 4000 l of 5% and 6%, and 5000 l of 5% and 6% dilutions. There were three treatments.

The last observations at the end of the growing season were that the treatments in October, at the end of the growing season, no longer killed liverwort to a significant extent.

Similar tests were continued during the growing season the next year, 2023. Vinegar was applied both in greenhouses and in the open. The application was implemented by using an irrigation ramp, and an effective content was found to be an 8% solution (0.8% acetic acid). At the earliest, vinegar was applied on seedlings of about 7 weeks. There was no need to apply earlier because of an insignificant amount of liverwort. Also, a preventive treatment was found unnecessary, because the solution does not form a film on the surface of the cultivation cell.

A content of 6% (0.6% acetic acid) was tested for birch of a few weeks, which suffered from the treatment. The same content was also tested for pine of about 7 weeks, whereby the lower needles of the pine suffered slightly. The damage is probably due to the fact that pine has a wider way of growing than spruce, and the growths are closed at an early stage, i.e. the needles cover a large surface area of the cultivation cell.

As to the weather, it was found that the treatment should not be implemented in sunny weather. This may increase a risk of needle damage, particularly when there is lot of liverwort and the seedling growths have closed up. In such a case, the treatment substance will remain in the growths, and the acid may thus damage the lowest needles. The growths are thus, in a way, exposed to the treatment too much.

Furthermore, in the autumn, it was found in greenhouse cultivation that because of the cool and moist atmosphere in the greenhouses, the treatment substance did not evaporate from the growths as desired, and the seedlings were more susceptible to damage.

## Claims

1. A method for controlling bryophytes in cultivation of seedlings, comprising the cultivation of one or more seedlings in a substrate, wherein the method comprises
- providing a water-based solution containing only one active agent, 0.3 to 1.5 wt-% of acetic acid as the only organic compound, and
- treating the substrate comprising one or more seedlings with the water-based solution.

2. The method according to claim 1, wherein the water-based solution contains 0.4 to 1.2 wt-% of acetic acid as the only organic acid, such as 0.4 to 1.0 wt-% or 0.4 to 0.8 wt-%.

3. The method according to claim 1 or 2, wherein the bryophyte is liverwort.

4. The method according to any of the preceding claims, wherein the substrate comprises a pack of cells.

5. The method according to any of the preceding claims, wherein the seedlings are forest seedlings, such as coniferous forest seedlings, for examples spruce and/or pine seedlings.

6. The method according to any of the preceding claims, wherein the substrate comprising one or more seedlings is in a nursery.

7. The method according to any of the preceding claims, wherein the substrate comprising one or more seedlings is in a greenhouse.

8. The method according to any of the preceding claims, wherein the substrate comprising one or more seedlings is treated by sprinkling with the water-based solution.

9. The method according to claim 8, wherein the sprinkling is performed by means of an irrigation device, such as an irrigation ramp.

10. The method according to any of the preceding claims, wherein the water-based solution is obtained from vinegar.

11. The method according to any of the preceding claims, wherein the water-based solution does not contain added salt, mineral compounds, alcohol, surfactants, oil, protein, carbohydrates, such as starch or other organic polymers, vegetable extract, control substance, and/or other active agents.

12. The method according to any of the preceding claims, wherein the water-based solution is applied in a quantity of 2000 to 6000 litres per hectare, such as 3000 to 5000 litres per hectare, per treatment.

13. Use of a water-based solution which contains only one active agent, acetic acid, as the only organic compound, in a concentration of 0.3 to 1.5 wt-% of acetic acid, for controlling bryophytes in a substrate upon cultivation of seedlings in the substrate.

14. The use according to claim 13, wherein the bryophyte is liverwort, and/or the seedlings are forest seedlings, such as coniferous forest seedlings.

15. The use according to claim 13 or 14 for controlling bryophytes by a method according to any of the claims 1 to 12.
